# FASCICULE DE BREVET EUROPEEN

(11) **EP 3 918 704 B1**
(45) Date de publication et mention de la délivrance du brevet: **21.02.2024**
(21) Numéro de dépôt: 20771575.6
(22) Date de dépôt: 17.09.2020
(51) Int. Cl.: H02M 7/66, H02M 7/758, H02M 7/797, H02M 7/81, B60L 53/14, B60L 53/63, H02J 3/32, H02J 7/04, H02J 11/00, H02M 3/335, H02M 5/12, H02M 7/68

(54) **DISPOSITIF DE RECHARGE RAPIDE D'UN VEHICULE AUTOMOBILE**
SCHNELLLADEVORRICHTUNG FÜR EIN KRAFTFAHRZEUG
RAPID CHARGING DEVICE FOR A MOTOR VEHICLE

(30) Priorité: 11.10.2019 FR 1911314
(43) Date de publication de la demande: 08.12.2021
(73) Titulaire: NW Joules, 75007 Paris (FR)
(72) Inventeur: KERDELHUE, Jean-Christophe, 75007 Paris (FR)
(74) Mandataire: Cabinet Laurent & Charras
(86) Numéro de dépôt international: PCT/EP2020/076060
(87) Numéro de publication internationale: WO 2021/069189

(56) Documents cités:
- EP-A1- 1 372 239
- DE-A1- 3 813 868
- JP-A- H10 174 450
- JP-A- 2020 022 311
- US-A1- 2014 097 693
- US-B2- 10 424 945

## Description

### Domaine technique

L'invention concerne le domaine des dispositifs de recharge de véhicules automobiles, tels qu'une voiture ou un bus électrique ou hybride. Ces dispositifs de recharge sont également appelés « bornes de recharge » et peuvent être implantés dans divers endroits, tels que les parkings privés, les parkings publics de magasins ou de restaurants par exemple.

L'invention vise plus particulièrement une borne de recharge dite « rapide ».

### Art antérieur

Le développement des véhicules électriques ou hybrides s'accompagne naturellement d'un développement des solutions de recharge de ces véhicules. Un des points bloquant le développement de l'usage des véhicules uniquement électriques est le temps de recharge de ces véhicules. En effet, ce temps de recharge est bien supérieur à celui nécessaire pour faire le plein de carburant d'un véhicule thermique. Ainsi, pour parcourir des longues distances, un conducteur utilise plus facilement un véhicule thermique ou hybride qu'un véhicule uniquement électrique.

La recharge d'un véhicule électrique (ou hybride) est réalisée en rechargeant une ou plusieurs batteries connectées sur le réseau électrique du véhicule. Pour ce faire, l'énergie électrique est classiquement consommée sur un réseau électrique présentant une tension alternative. La borne de recharge a pour fonction de transformer la tension alternative du réseau à un niveau de tension adapté à la batterie et de transformer la tension alternative en une tension continue.

Une borne de recharge classique est connectée à un réseau électrique fonctionnant en 220V alternatif et elle comporte une entrée de réseau connectée à un transformateur abaissant la tension alternative à un niveau de l'ordre de 50V relié à un convertisseur alternatif/continu connecté à une prise de charge du véhicule électrique.

Avec ce type de bornes de recharge largement démocratisées, une recharge complète d'un véhicule électrique prend typiquement 8 à 12 heures.

Cependant, le soutirage réalisé par plusieurs bornes de recharge sur un réseau peut entraîner des dégradations au niveau des performances du réseau. En effet, dans un réseau électrique, la consommation doit toujours être équilibrée avec la production au risque de faire varier les caractéristiques du réseau, notamment sa fréquence. Pour ce faire, le gestionnaire du réseau peut utiliser des réserves primaires, secondaires et tertiaires, qui interviennent à des échelles de temps et de puissance différentes. Par exemple, la réserve primaire présente un délai d'action inférieur à 30 secondes, la réserve secondaire présente un délai d'action inférieur à 15 min et la réserve tertiaire présente un délai d'action de 30 min.

Ainsi, lorsqu'un déséquilibre est constaté, les réserves primaires s'activent automatiquement en fonction des écarts de fréquence mesurés entre le réseau et un signal de référence élaboré par le gestionnaire de réseau de transport. En effet, lorsqu'un déséquilibre se produit entre la production et la consommation, la fréquence du réseau s'écarte du niveau requis de 50 Hz et cet écart active la réserve primaire des entités participant à cette réserve primaire. Chacune de ces entités doit augmenter sa puissance d'injection si la fréquence est inférieure à 50 Hz ou diminuer sa puissance d'injection voire soutirer du courant, si la fréquence est supérieure à 50 Hz. Un nouveau point d'équilibre entre la production et la consommation est ainsi obtenu sur le réseau.

Pour obtenir la réactivité nécessaire, la réserve primaire comporte des entités de réserve connectées sur le réseau haute tension ou le réseau moyenne tension. En effet, un réseau de transport d'énergie électrique est classiquement structuré avec plusieurs niveaux de tension, par exemple des lignes haute-tension transportent le courant avec une tension entre 50kV et 400kV, des lignes moyenne-tension avec une tension entre 1kV et 50kV et des lignes basse-tension avec une tension de 220V. Ces lignes sont interconnectées avec des postes de transformation disposés entre les différents types de lignes.

Un équipement utilisant des batteries pour participer en tant qu'entité de réserve à la réserve primaire comporte classiquement un ensemble de batteries de très forte capacité chargées à moitié de leur capacité pour pourvoir, le cas échéant, injecter ou soutirer de la puissance sur le réseau. De même, cet équipement participe au réglage de tension suivant le cahier des charges du gestionnaire de réseau, en injectant ou soutirant de la puissance réactive. La réserve primaire doit être dimensionnée pour injecter ou restituer une part non négligeable de la production et de la consommation du réseau. En Europe, l'ensemble des entités de réserve formant la réserve primaire représentent une capacité de 3000MW, soit la puissance de production des deux plus gros réacteurs nucléaires en service. Pour obtenir cette puissance totale, chaque entité de réserve doit être dimensionnée pour présenter une capacité d'au moins 1 MW.

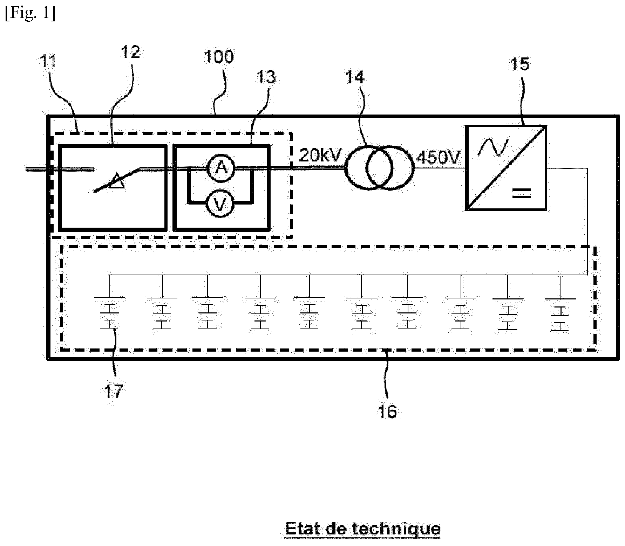

Plus précisément, tel qu'illustré sur la figure 1, un équipement d'équilibrage 100 à batteries 17 comporte une entrée de réseau 11 intégrant des organes de protection 12 du réseau haute-tension ou moyenne-tension et des organes de mesure 13 des performances du réseau pour détecter les besoins d'équilibrage en puissance et en tension. Cette entrée de réseau est connectée à un transformateur **14** abaissant la tension. Par exemple, lorsque l'équipement d'équilibrage est connecté sur le réseau moyenne-tension, le transformateur peut être configuré pour transformer une tension alternative de 20kV en une tension alternative de 450V. La sortie du transformateur **14** est connectée à un onduleur **15** configuré pour convertir la tension alternative en une tension continue alimentant un réseau **16** de batteries **17.** Un organe de supervision, non représenté, mesure les puissances active et réactive du réseau au cours du temps et commande la charge ou la décharge des batteries **17** pour compenser les déséquilibres du réseau. Des exemples de cette technologie sont décris dans les publications de brevets US2014/097693 A1 et EP1372239 A1.

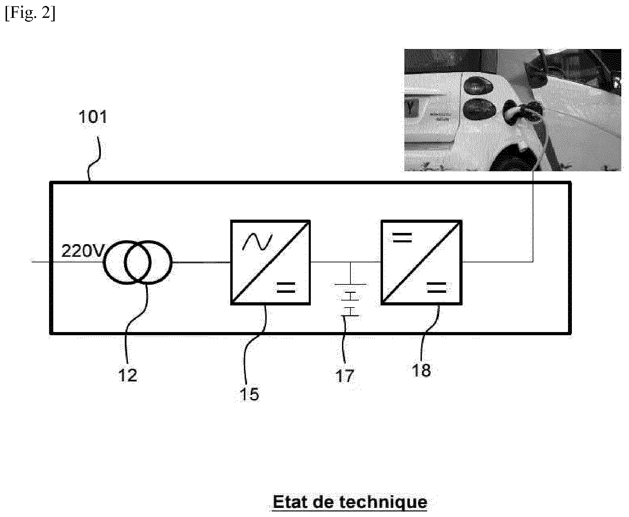

Pour limiter la puissance souscrite de raccordement de l'équipement au réseau, il est également connu des bornes de recharges **101** pour véhicules électriques intégrant une ou plusieurs batteries, tel qu'illustré sur la figure 2. Ce type de borne de recharge **101** intègre un transformateur **12** abaissant la tension alternative du réseau basse-tension suivi d'un convertisseur alternatif/continu **15** connecté à une batterie **17** et configuré pour adapter le niveau de tension à la batterie **17.**

La sortie du convertisseur alternatif/continu **15** est également connectée à un second convertisseur continu/continu **18** connecté à une prise de charge du véhicule électrique et configuré pour adapter le niveau de tension au véhicule électrique. Lorsque la demande de puissance dépasse une valeur seuil, la batterie **17** est utilisée de sorte à limiter les contraintes qui seraient imposées au réseau.

En outre, la batterie **17** peut être rechargée après la phase de charge d'un véhicule électrique. Bien que ce mode de réalisation limite la puissance instantanée soutirée sur le réseau, le temps de recharge n'est pas amélioré par rapport à une borne de recharge classique.

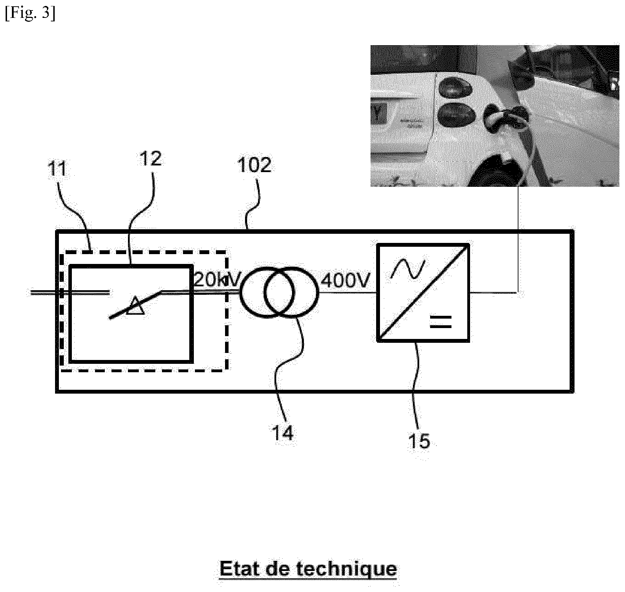

Pour améliorer la vitesse de recharge, il est possible d'utiliser une borne de recharge directement connectée sur le réseau haute-tension ou sur le réseau moyenne-tension de sorte à pouvoir fournir une puissance maximale au véhicule électrique. Tel qu'illustré sur la figure 3, ce type de borne de recharge **102** intègre une entrée de réseau **11** intégrant des organes de protection **12** du réseau haute-tension ou moyenne-tension et un transformateur **14** abaissant la tension.

La sortie du transformateur **14** est connectée à un onduleur **15** configuré pour convertir la tension alternative en une tension continue alimentant la prise de recharge du véhicule électrique. Avec ce type de borne de recharge, la recharge d'un véhicule électrique peut être réalisée en 20 min.

Bien que cette solution soit efficace pour améliorer la vitesse de recharge d'un véhicule électrique, l'encombrement et le coût des organes de protection **12** nécessaires pour être autorisé à se raccorder sur le réseau haute-tension ou moyenne-tension sont prohibitifs pour le déploiement de ce type de bornes de recharge.

Le problème technique de l'invention consiste donc à obtenir une borne de recharge rapide qui surmonte les inconvénients des dispositifs précédemment décrits.

### Exposé de l'invention

Pour répondre à ce problème technique, l'invention propose de modifier un équipement d'équilibrage formant une partie de la réserve primaire ou secondaire pour réaliser, en plus de la fonction d'équilibrage du réseau, une fonction de recharge d'un véhicule électrique ou hybride. Ainsi, les organes de de protection nécessaires pour être autorisé à se raccorder sur le réseau haute-tension ou moyenne-tension sont communs pour l'équipement d'équilibrage et la borne de recharge, ce qui limite le nombre de composants nécessaires à l'installation de la borne de recharge.

Pour ce faire, le transformateur est modifié avec un enroulement supplémentaire dédié pour alimenter la prise de recharge du véhicule électrique à travers un onduleur dédié.

A cet effet, selon un premier aspect, l'invention concerne un équipement d'équilibrage d'un réseau haute-tension ou moyenne-tension comportant :
- une entrée de réseau intégrant des organes de protection dudit réseau et des organes de mesure des performances dudit réseau pour détecter les besoins d'équilibrage ;
- un transformateur comportant un premier enroulement connecté en sortie de ladite entrée de réseau et configuré pour abaisser la tension dudit réseau ;
- un onduleur connecté sur un second enroulement dudit transformateur et configuré pour transformer une tension alternative en une tension continue ;
- un ensemble de batteries connectées sur ladite tension continue ; et
- un organe de supervision configuré pour activer ledit onduleur et assurer la charge ou la décharge desdites batteries lorsqu'un déséquilibre est mesuré sur ledit réseau par lesdits organes de mesure.

L'invention se caractérise en ce que ledit équipement d'équilibrage comporte également un onduleur supplémentaire connecté sur un troisième enroulement dudit transformateur dont la sortie permet d'alimenter au moins une prise de recharge d'un véhicule électrique ou hybride ; et des moyens de détection d'un besoin de charge de ladite prise de recharge ; ledit organe de supervision étant configuré pour activer ledit onduleur supplémentaire lorsqu'un besoin de charge est détecté sur ladite prise de recharge et que les besoins d'injection sur le réseau sont inférieurs à une valeur seuil.

Ainsi, l'invention propose d'utiliser un équipement d'équilibrage pour recharger un véhicule électrique ou hybride sauf dans les phases pour lesquelles une grande quantité de puissance doit être injectée sur le réseau. En effet, dans un équipement d'équilibrage, les phases d'injection et de soutirage sont normalement relativement courtes, souvent quelques dizaines de secondes. Comparativement au temps de recharge d'un véhicule électrique ou hybride, ces instants de soutirage ou d'injection sont très faibles.

Contrairement à une borne de recharge classique, la borne de recharge réalisée par l'invention est beaucoup plus rapide, puisqu'elle est connectée sur le réseau haute-tension ou moyenne-tension. Ainsi, bien qu'elle ne soit pas disponible tout le temps, car la borne de recharge réalisée par l'invention n'est pas utilisable lorsque l'équipement d'équilibrage doit injecter une grande quantité de puissance sur le réseau, l'amélioration de la vitesse de recharge au cours des autres phases compense largement les instants dans lesquels la borne de recharge ne peut pas être utilisée pour charger un véhicule électrique ou hybride.

En outre, comparée à une borne de recharge rapide de l'état de la technique, le coût d'installation de la borne de recharge de l'invention est moindre puisque les organes de de protection nécessaires pour être autorisé à se raccorder sur le réseau haute-tension ou moyenne-tension sont communs pour l'équipement d'équilibrage et la borne de recharge ce qui limite le nombre de composants nécessaires à l'installation de la borne de recharge.

L'invention est donc issue d'une découverte selon laquelle l'indisponibilité de la borne de recharge dans les instants de forte injection d'un équipement d'équilibrage est compensée par le gain en vitesse de recharge et ne dégrade pas de manière notable la durée de vie des batteries intégrées dans les véhicules électriques ou hybrides.

En effet, il est connu que les coupures dans les phases de charge dégradent la durée de vie des batteries intégrées dans les véhicules électriques ou hybrides. Or, il a été mesuré une durée de vie sensiblement constante pour des batteries Lithium-ion intégrées dans les véhicules électriques ou hybrides même en utilisant une borne de recharge conforme à l'invention, c'est-à-dire avec des instants d'indisponibilité pouvant intervenir dans les phases de charge.

Selon un mode de réalisation, lesdits organes de mesure des performances dudit réseau pour détecter les besoins d'équilibrage comportent un compteur d'énergie dédié au gestionnaire dudit réseau et un compteur d'énergie indépendant. Le compteur dédié au gestionnaire de réseau permet classiquement, dans un équipement d'équilibrage, de permettre au gestionnaire de réseau de vérifier que l'équipement d'équilibrage est actif selon le contrat imposé par le gestionnaire de réseau. Par exemple, le gestionnaire de réseau peut avoir imposé comme contrainte que l'équipement d'équilibrage effectue un soutirage de 10% de puissance active lorsque la fréquence dépasse une valeur seuil ou tout autre mode de prévention du réseau et, de même, un soutirage de 10% de puissance réactive lorsque la tension dépasse une valeur seuil ou tout autre mode de prévention du réseau. Le compteur indépendant permet de vérifier la réalisation du contrat par le prestataire. En outre, dans le cadre de l'invention, le compteur indépendant peut être utilisé pour mesurer la puissance soutirée sur le réseau pour alimenter la borne de recharge et non pour équilibrer le réseau.

Selon un mode de réalisation, ledit transformateur est câblé en triangle au niveau du premier enroulement, en triangle au niveau du second enroulement et en étoile au niveau du troisième enroulement. Ce mode de réalisation permet d'obtenir une puissance maximum au niveau de l'ensemble de batteries par l'intermédiaire d'un couplage triangle/triangle qui ne permet pas de transmettre le neutre. Au contraire, pour la borne de recharge, il peut être recherché d'avoir accès au neutre et le couplage triangle/étoile permet de transmettre le neutre sans dégrader le couplage triangle/triangle alimentant l'ensemble de batteries.

Pour mettre en oeuvre l'invention, il est nécessaire de configurer l'organe de supervision pour permettre l'injection et le soutirage sur le réseau tout en utilisant le même réseau pour alimenter le second onduleur dans les phases pour lesquelles l'injection maximum n'est pas nécessaire. Pour ce faire, la méthode la plus simple est d'autoriser le fonctionnement du second onduleur lorsque la prise de recharge est utilisée et que l'injection maximum sur le réseau n'est pas requise.

Dans ce mode de réalisation, lesdits moyens de détection d'un besoin de charge de ladite prise de recharge correspondent à un capteur configuré pour détecter une consommation sur ladite prise de recharge.

En variante, la commande des deux onduleurs peut dépendre à la fois des besoins d'équilibrage du réseau et des besoins de soutirage de la borne de recharge. Ainsi, un compromis peut être recherché entre ces deux besoins lorsque les besoins d'injection sur le réseau ne sont pas maximaux.

Dans ce mode de réalisation, lesdits moyens de détection d'un besoin de charge de ladite prise de recharge correspondent à une sonde de mesure de la puissance de recharge demandée sur ladite prise de recharge.

En outre, dans ce mode de réalisation, ledit équipement d'équilibrage comporte préférentiellement une sonde disposée entre ledit transformateur et ledit onduleur supplémentaire de sorte à mesurer une puissance instantanée consommée par ladite prise de recharge. De même, ledit équipement d'équilibrage comporte préférentiellement une sonde disposée entre ledit onduleur et ledit ensemble de batteries de sorte à mesurer une puissance instantanée consommée par ladite prise de recharge.

Avec ces deux sondes, l'organe de supervision est capable de détecter la puissance utilisée sur chaque sortie du transformateur pour équilibrer le soutirage réalisé sur le réseau en fonction des besoins de soutirage pour alimenter la prise de recharge et pour maintenir l'ensemble des batteries au point d'équilibre correspondant sensiblement à la moitié de la capacité totale de chacune des batteries.

Pour ce faire, selon un second aspect, l'invention concerne un procédé de gestion d'un équipement d'équilibrage selon le premier aspect de l'invention, ledit procédé comportant les étapes suivantes :
- mesure de la différence entre une mesure de tension, une mesure de fréquence et une mesure de courant du réseau et des valeurs nominales pour déterminer les besoins d'injection et/ou de soutirage de puissance active et/ou réactive ;
- détermination d'une puissance de commande de l'onduleur connecté à l'ensemble des batteries en fonction des besoins d'injection et/ou de soutirage ;
- si les besoins d'injection sont supérieurs à une puissance maximum d'injection, désactivation de l'onduleur supplémentaire et activation de l'onduleur connecté à l'ensemble de batteries pour injecter ladite puissance maximum d'injection,
- si les besoins d'injection sont inférieurs à une puissance maximum d'injection, désactivation de l'onduleur supplémentaire et activation de l'onduleur connecté à l'ensemble de batteries pour injecter ladite puissance de commande,
- si les besoins de soutirage sont inférieurs à une puissance de recharge demandée sur ladite prise de recharge et que le niveau de charge de l'ensemble des batteries est supérieur à une valeur seuil, désactivation de l'onduleur connecté à l'ensemble de batteries et activation de l'onduleur supplémentaire pour soutirer ladite puissance de commande, et - si les besoins de soutirage sont supérieurs à une puissance de recharge demandée sur ladite prise de recharge et que le niveau de charge de l'ensemble des batteries est inférieur à une valeur seuil, activation des deux onduleurs jusqu' à ce que le niveau de charge de l'ensemble des batteries soit supérieur à ladite valeur seuil.

De préférence, ladite puissance de commande est déterminée en fonction de pertes de charge estimées à partir de mesures issues de deux sondes respectivement disposées entre ledit transformateur et ledit onduleur supplémentaire et entre ledit onduleur et ledit ensemble de batteries.

### Description sommaire des figures

La manière de réaliser l'invention ainsi que les avantages qui en découlent, ressortiront bien des modes de réalisation qui suivent, donnés à titre indicatif mais non limitatif, à l'appui des figures 1 à 6 qui constituent :
[Fig. 1] La figure 1 est une représentation schématique d'un équipement d'équilibrage à batteries de l'état de la technique ;
[Fig. 2] La figure 2 est une représentation schématique d'une borne de recharge à batterie de l'état de la technique ;
[Fig. 3] La figure 3 est une représentation schématique d'une borne de recharge « rapide » de l'état de la technique ;
[Fig. 4] La figure 4 est une représentation schématique d'un équipement d'équilibrage selon un premier mode de réalisation de l'invention ;
[Fig. 5] La figure 5 est une représentation schématique d'un équipement d'équilibrage selon un second mode de réalisation de l'invention ; et
[Fig. 6] La figure 6 est un ordinogramme des étapes de gestion d'un organe de supervision de l'équipement d'équilibrage de la figure 4.

### Description détaillée de l'invention

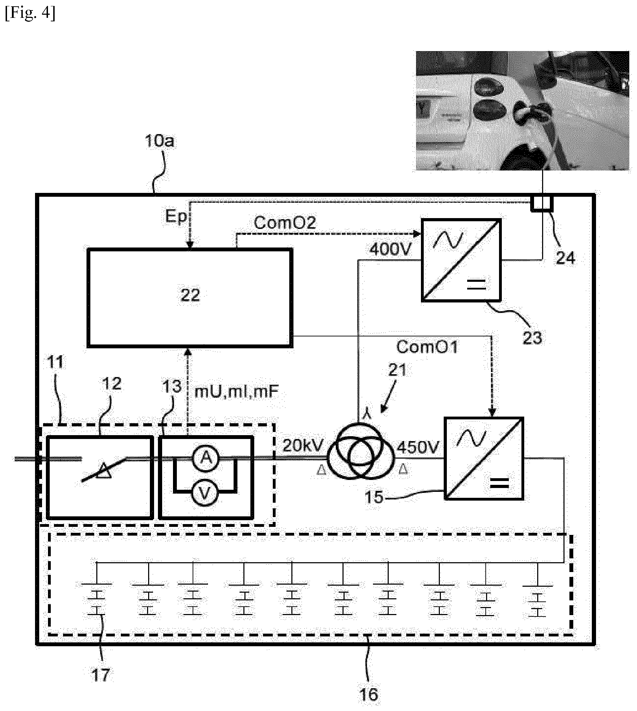

La figure 4 illustre un équipement d'équilibrage **10a** formant également une borne de recharge pour un véhicule électrique ou hybride. Cet équipement d'équilibrage **10a** comporte classiquement une entrée de réseau **11** intégrant des organes de protection **12** et des organes de mesure **13.** L'entrée de réseau **11** peut être connectée au réseau haute-tension ou moyenne-tension. Par exemple, l'entrée de réseau **11** peut être connectée à deux câbles électriques distincts transportant chacun une tension de 20 kV. En outre, l'entrée de réseau **11** peut également comprendre une sortie de réseau permettant à un des deux câbles de traverser l'entrée de réseau **11** de sorte à former un équipement d'équilibrage traversé par le réseau.

Les organes de protection **12** correspondent typiquement à des disjoncteurs haute-tension ou moyenne-tension, par exemple des disjoncteurs commandés pouvant sectionner un courant de 400 A afin de protéger l'équipement d'équilibrage **10a.** De préférence, les câbles réseaux entrent dans l'entrée de réseaux **11** sur des disjoncteurs manuels permettant de réaliser des opérations de maintenance dans l'équipement d'équilibrage **10a.** Un disjoncteur automatique est préférentiellement monté à la sortie de ces disjoncteurs manuels de sorte à sectionner le courant traversant l'entrée de réseaux **11** lorsque les appels de courant à l'intérieur de l'équipement d'équilibrage **10a** sont supérieurs à une valeur seuil. Ainsi, ces organes de protection **12** sont préférentiellement couplés avec des organes de mesure **13** de sorte à détecter les instants pour lesquels il convient de sectionner le courant traversant l'entrée de réseaux **11.**

Ces organes de mesure **13** ont également pour fonction de mesurer la fréquence, la tension ainsi que le déphasage entre l'intensité et cette tension, le tout afin de de détecter les besoins d'équilibrage du réseau en puissance active et réactive. De préférence, ces organes de mesure **13** intègrent plusieurs compteurs d'énergie : un compteur d'énergie associé au gestionnaire de réseau et un compteur d'énergie indépendant associé à l'exploitant de l'équipement d'équilibrage **10a.** Ces compteurs d'énergie sont préférentiellement connectés à un réseau de communication filaire ou sans fil.

Ainsi, le gestionnaire du réseau peut obtenir des informations concernant les besoins d'équilibrage en temps réel en utilisant les mesures réalisées par les organes de mesure **13** de l'équipement d'équilibrage **10a.** De même, les mesures réalisées par le compteur d'énergie indépendant peuvent être transmises à l'exploitant de l'équipement d'équilibrage **10a** pour contrôler la quantité d'énergie injectée ou soutirée sur le réseau.

Les organes de mesure **13** transmettent au moins trois informations à un organe de supervision **22** : une mesure de tension **mU**, une mesure de fréquence **mF** et une mesure de courant **mI**, l'organe de supervision **22** étant configuré pour calculer le déphasage entre le courant et la tension. En variante, les organes de mesure **13** peuvent comporter des moyens de détection automatique du déphasage entre la tension et le courant et ce déphasage peut être transmis à l'organe de supervision **22.**

L'organe de supervision **22** a pour fonction première d'identifier les besoins d'équilibrage du réseau **ΔU**, **ΔF** et **ΔI** et de combler ces besoins en fonction de l'état de charge des batteries **17** intégrées dans l'équipement d'équilibrage **10a.** Cet organe de supervision **22** peut se présenter sous la forme d'un microcontrôleur ou d'un microprocesseur associé à une suite d'instructions. De plus, cet organe de supervision **22** peut être contrôlé à distance, par exemple par l'exploitant de l'équipement d'équilibrage **10a** afin de mettre à jour les stratégies d'équilibrage ou les autorisations de recharge des véhicules électriques ou hybrides.

Pour réaliser l'équilibrage ou la recharge d'un véhicule électrique ou hybride, la sortie de l'entrée de réseau **11** est connectée sur un transformateur **21** comportant trois enroulements. Le premier enroulement et préférentiellement câblé en triangle et reçoit la tension de 20 kV du réseau. Ce premier enroulement est couplé à un second enroulement préférentiellement également câblé en triangle avec une tension abaissée à 450 V.

Cette tension alternative abaissée est connectée à un onduleur **15** permettant de transformer cette tension alternative en une tension continue alimentant l'ensemble **16** des batteries **17.** De préférence, la sortie de l'onduleur **15** présent un niveau de tension continu compris entre 700 et 1000 volts.

Le transformateur **21** comporte également un troisième enroulement préférentiellement connecté en étoile est relié à un onduleur supplémentaire **23.** Cet onduleur supplémentaire reçoit une tension abaissée à 400 V et transforme cette tension alternative en une tension continue adaptée pour recharger un véhicule automobile, par exemple 50 V. Ainsi, la sortie de l'onduleur supplémentaire **23** est connectée à une prise de recharge d'un véhicule électrique ou hybride **24.** Bien entendu, les niveaux de tension au niveau de l'entrée de réseau **11**, du transformateur **21** et des onduleurs **15**, **23** peuvent varier sans changer l'invention.

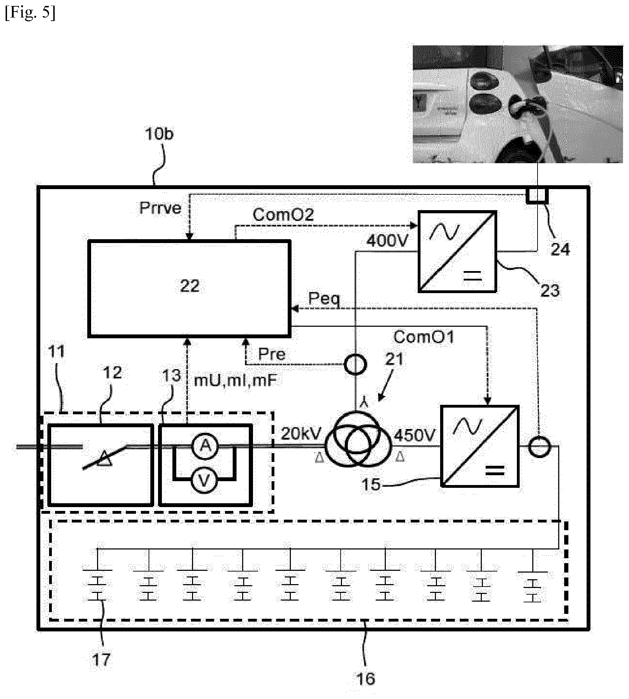

Outre ces éléments essentiels à la réalisation de l'invention, d'autres éléments peuvent être mis en oeuvre pour améliorer la sécurité ou les stratégies de commande de l'équipement d'équilibrage **10a.** Par exemple, la figure 5 illustre des sondes disposées après le transformateur **21** pour mesurer la puissance en différents points de l'équipement d'équilibrage **10b.** Plus précisément, une sonde est disposée en sortie de l'onduleur **15** pour mesurer la puissance au niveau de l'ensemble des batteries **Peq**, c'est-à-dire après les pertes liées au transformateur **21** et à l'onduleur **15**, et une sonde est disposée entre le troisième enroulement du transformateur **21** et l'onduleur supplémentaire **23** pour mesurer la puissance consommée **Pre** par la prise de recharge **24.**

Pour adapter la stratégie d'équilibrage des deux onduleurs **15** et **23**, il suffit de détecter une consommation ou, à tout le moins, une présence sur la prise de recharge **24** au moyen d'un signal **Ep**, tel qu'illustré sur la figure 4. De préférence, tel qu'illustré sur la figure 5, la puissance de recharge demandée **Prrve** par la prise de recharge **24** est mesurée par une sonde disposée au niveau de la prise de recharge **24** afin de fournir une information à l'organe de supervision **22.**

À partir de ces différentes informations transmises à l'organe de supervision **22**, l'organe de supervision **22** peut déterminer la stratégie à opérer par les onduleurs **15** et **23.**

Outre ces éléments structurels permettant de recharger un véhicule électrique ou hybride et d'effectuer l'équilibrage du réseau, les équipements d'équilibrage **10a-10b** peuvent intégrer des éléments classiques d'un équipement d'équilibrage, tels qu'un groupe froid permettant le refroidissement du transformateur **21** ou de l'ensemble des batteries **17**, une alarme, une centrale de protection contre les incendies...

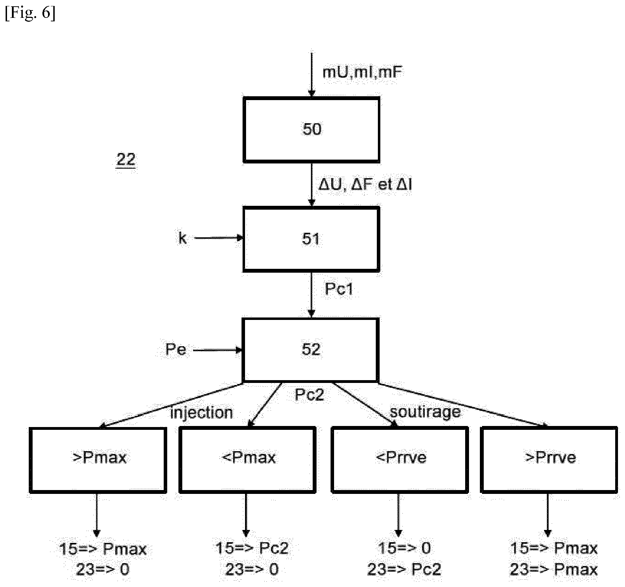

La figure 6 illustre un exemple de procédé de gestion des deux onduleurs **15** et **23** mis en oeuvre par l'organe de supervision **22.** Dans une première étape **50**, ce procédé mesure la différence entre la tension **mU**, la fréquence **mF** et le courant **mI** et des valeurs nominales pour détecter les besoins **ΔU**, **ΔI, ΔF** d'injection ou de soutirage sur le réseau de puissance réactive et/ou active. Ainsi, lorsque la différence entre une grandeur nominale et grandeur mesurée **mU**, **mF**, **mI** dépasse une valeur seuil, un besoin d'injection ou de soutirage est déterminé en fonction de cette différence. La seconde étape **51** vise à déterminer la puissance à appliquer à l'onduleur **15** en fonction des besoins **Pc1** d'injection ou de soutirage et d'un coefficient **k.** Ces besoins **Pc1** sont ensuite précisés dans une seconde étape **52** de détermination en prenant en compte les pertes réelles au niveau du transformateur **21.** Ces pertes réelles peuvent être estimées par les différentes sondes en fonction de l'état des onduleurs **15** et **23.**

Les besoins **Pc2** obtenus à l'issue de l'étape **52** peuvent être appliqués en fonction de plusieurs scénarii prédéfinis, par exemple :
- si les besoins d'injection **ΔU**, **ΔF, ΔI** sont supérieurs à une puissance maximum d'injection **Pmax,** désactivation de l'onduleur supplémentaire **23** et activation de l'onduleur **15** connecté à l'ensemble de batteries **17** pour injecter la puissance maximum d'injection **Pmax,**
- si les besoins d'injection **ΔU**, **ΔF, ΔI** sont inférieurs à une puissance maximum d'injection **Pmax,** désactivation de l'onduleur supplémentaire **23** et activation de l'onduleur **15** connecté à l'ensemble de batteries **17** pour injecter la puissance de commande **Pc1** ou **Pc2,**
- si les besoins de soutirage **ΔU**, **ΔF, ΔI** sont inférieurs à une puissance de recharge demandée **Prrve** sur la prise de recharge **24** et que le niveau de charge de l'ensemble des batteries **17** est supérieur à une valeur seuil, désactivation de l'onduleur **15** connecté à l'ensemble de batteries **17** et activation de l'onduleur supplémentaire **23** pour soutirer la puissance de commande **Pc1** ou **Pc2**, et
- si les besoins de soutirage **ΔU**, **ΔF, ΔI** sont supérieurs à une puissance de recharge demandée **Prrve** sur la prise de recharge **24** et que le niveau de charge de l'ensemble des batteries **17** est inférieur à une valeur seuil, activation des deux onduleurs **15**, **23** jusqu'à ce que le niveau de charge de l'ensemble des batteries **17** soit supérieur à la valeur seuil.

L'invention permet ainsi d'obtenir un équipement d'équilibrage **10a-10b** permettant, outre l'équilibrage du réseau, de recharger un véhicule électrique ou hybride de manière très rapide puisque l'équipement d'équilibrage est directement connecté sur le réseau haute-tension ou moyenne tension. L'invention permet donc d'obtenir une borne de recharge « rapide » à moindre coût car elle réutilise les composants existants dans l'équipement d'équilibrage **10a-10b,** notamment au niveau de l'entrée de réseau **11.**

## Revendications

1. Equipement d'équilibrage (10a-10b) d'un réseau haute-tension ou moyenne-tension comportant :
- une entrée de réseau (11) intégrant des organes de protection (12) dudit réseau et des organes de mesure (13) des performances dudit réseau pour détecter les besoins d'équilibrage ;
- un transformateur (21) comportant un premier enroulement connecté en sortie de ladite entrée de réseau (11) et configuré pour abaisser la tension dudit réseau ;
- un onduleur (15) connecté sur un second enroulement dudit transformateur (14) et configuré pour transformer une tension alternative en une tension continue ;
- un ensemble de batteries (17) connectées sur ladite tension continue ; et
- un organe de supervision (22) configuré pour activer ledit onduleur (15) et assurer la charge ou la décharge desdites batteries (17) lorsqu'un déséquilibre est mesuré sur ledit réseau par lesdits organes de mesure (13) ;
dans lequel ledit équipement d'équilibrage (10a-10b) comporte également un onduleur supplémentaire (23) connecté sur un troisième enroulement dudit transformateur (21) dont la sortie permet d'alimenter au moins une prise de recharge (24) d'un véhicule électrique ou hybride ; et des moyens de détection d'un besoin de charge de ladite prise de recharge (24) ;
ledit organe de supervision (22) étant configuré pour activer ledit onduleur supplémentaire (23) lorsqu'un besoin de charge est détecté sur ladite prise de recharge (24) et que les besoins d'injection sur le réseau sont inférieurs à une valeur seuil.

2. Equipement d'équilibrage selon la revendication 1, ***dans lequel*** lesdits organes de mesure (13) des performances dudit réseau pour détecter les besoins d'équilibrage comportent un compteur d'énergie dédié au gestionnaire dudit réseau et un compteur d'énergie indépendant.

3. Equipement d'équilibrage selon l'une des revendications 1 à 2, ***dans lequel*** ledit transformateur (21) est câblé en triangle au niveau du premier enroulement, en triangle au niveau du second enroulement et en étoile au niveau du troisième enroulement.

4. Equipement d'équilibrage selon l'une des revendications 1 à 3, ***dans lequel*** lesdits moyens de détection d'un besoin de charge de ladite prise de recharge (24) correspondent à un capteur configuré pour détecter une consommation (Ep) sur ladite prise de recharge (24).

5. Equipement d'équilibrage selon l'une des revendications 1 à 3, ***dans lequel*** lesdits moyens de détection d'un besoin de charge de ladite prise de recharge (24) correspondent à une sonde de mesure de la puissance de recharge demandée (Prrve) sur ladite prise de recharge (24).

6. Equipement d'équilibrage selon l'une des revendications 1 à 5, ***dans lequel*** ledit équipement d'équilibrage (10a-10b) comporte une sonde disposée entre ledit transformateur (21) et ledit onduleur supplémentaire (23) de sorte à mesurer une puissance instantanée (Pre) consommée par ladite prise de recharge (24).

7. Equipement d'équilibrage selon l'une des revendications 1 à 6, ***dans lequel*** ledit équipement d'équilibrage (10a-10b) comporte une sonde disposée entre ledit onduleur (15) et ledit ensemble de batteries (17) de sorte à mesurer une puissance instantanée (Peq) consommée par ladite prise de recharge (24).

8. Procédé de gestion d'un équipement d'équilibrage selon l'une des revendications 1 à 7, ledit procédé comportant les étapes suivantes :
- mesure (50) de la différence entre une mesure de tension (mU), une mesure de fréquence (mF) et une mesure de courant (ml) du réseau et des valeurs nominales pour déterminer les besoins d'injection et/ou de soutirage (ΔU, ΔF, ΔI) ;
- détermination (51, 52) d'une puissance de commande (Pc1, Pc2) de l'onduleur (15) connecté à l'ensemble des batteries (17) en fonction des besoins d'injection et/ou de soutirage (ΔT, ΔF, ΔC) de puissance active et/ou réactive ;
- si les besoins d'injection (ΔT, ΔF, ΔC) sont supérieurs à une puissance maximum d'injection (Pmax), désactivation de l'onduleur supplémentaire (23) et activation de l'onduleur (15) connecté à l'ensemble de batteries (17) pour injecter ladite puissance maximum d'injection (Pmax),
- si les besoins d'injection (ΔT, ΔF, ΔC) sont inférieurs à une puissance maximum d'injection (Pmax), désactivation de l'onduleur supplémentaire (23) et activation de l'onduleur (15) connecté à l'ensemble de batteries (17) pour injecter ladite puissance de commande (Pc1, Pc2),
- si les besoins de soutirage (ΔT, ΔF, ΔC) sont inférieurs à une puissance de recharge demandée (Prrve) sur ladite prise de recharge (24) et que le niveau de charge de l'ensemble des batteries (17) est supérieur à une valeur seuil, désactivation de l'onduleur (15) connecté à l'ensemble de batteries (17) et activation de l'onduleur supplémentaire (23) pour soutirer ladite puissance de commande (Pc1, Pc2), et
- si les besoins de soutirage (ΔT, ΔF, ΔC) sont supérieurs à une puissance de recharge demandée (Prrve) sur ladite prise de recharge (24) et que le niveau de charge de l'ensemble des batteries (17) est inférieur à une valeur seuil, activation des deux onduleurs (15, 23) jusqu'à ce que le niveau de charge de l'ensemble des batteries (17) soit supérieur à ladite valeur seuil.

9. Procédé de gestion selon la revendication 8, ***dans lequel*** ladite puissance de commande (Pc1, Pc2) est déterminée (52) en fonction de pertes de charge (Pe) estimées à partir de mesures (Pre, Peq) issues de deux sondes respectivement disposées entre ledit transformateur (21) et ledit onduleur supplémentaire (23) et entre ledit onduleur (15) et ledit ensemble de batteries (17).

## Patentansprüche

1. Ausgleichsvorrichtung (10a-10b) für ein Hochspannungs- oder Mittelspannungsnetz, das enthält:
- einen Netzeingang (11), der Schutzelemente (12) für dieses Netz enthält, sowie Elemente zur Messung (13) der Leistungen dieses Netzes zur Erkennung des Ausgleichsbedarfs;
- einen Transformator (21), der eine erste Wicklung enthält, verbunden am Ausgang dieses Netzeingangs (11) und konfiguriert zur Senkung der Spannung dieses Netzes;
- einen Wechselrichter (15), angeschlossen auf einer zweiten Wicklung dieses Transformators (14) und konfiguriert zur Umformung einer Wechselspannung in eine Gleichspannung;
- eine Batterieeinheit (17) verbunden mit dieser Gleichspannung; und
- ein Überwachungselement (22), konfiguriert zur Aktivierung dieses Wechselrichters (15) und zur Sicherstellung des Ladens oder Entladens dieser Batterien (17), wenn in diesem Netz von den erwähnten Messelementen (13) ein Ungleichgewicht gemessen wird;
wobei diese Ausgleichsvorrichtung (10a-10b) auch einen zusätzlichen Wechselrichter (23) enthält, verbunden mit einer dritten Wicklung dieses Transformators (21) über dessen Ausgang mindestens ein Ladeanschluss (24) eines Elektro- oder Hybridfahrzeugs gespeist werden kann; und Mittel zur Erkennung eines Ladebedarfs dieses Ladeanschlusses (24) ;
dabei ist dieses Überwachungselement (22) dazu konfiguriert, diesen zusätzlichen Wechselrichter (23) zu aktivieren, wenn an diesem Ladeanschluss (24) ein Bedarf festgestellt wird und der Bedarf bei der Einspeisung ins Netz unter einem Schwellenwert liegen.

2. Ausgleichsvorrichtung nach Anspruch 1, ***bei der*** die erwähnten Messelemente (13) für die Leistungen dieses Netzes, zur Erkennung des Ausgleichsbedarfs einen Energiezähler für den Betreiber dieses Netzes sowie einen unabhängigen Energiezähler enthalten.

3. Ausgleichsvorrichtung nach einem der Ansprüche 1 bis 2, ***bei der*** der erwähnte Transformator (21) im Dreieck geschaltet ist in Höhe der ersten Wicklung, im Dreieck in Höhe der zweiten Wicklung und im Stern in Höhe der dritten Wicklung.

4. Ausgleichsvorrichtung nach einem der Ansprüche 1 bis 3, ***bei der*** die erwähnten Mittel zur Erkennung eines Ladebedarfs dieses Ladeanschlusses (24) einem Fühler entsprechen, der zur Erkennung eines Verbrauchs (Ep) an diesem Ladeanschluss (24) konfiguriert ist.

5. Ausgleichsvorrichtung nach einem der Ansprüche 1 bis 3, ***bei der*** die erwähnten Mittel zur Erkennung eines Ladebedarfs dieses Ladeanschlusses (24) einer Messsonde der geforderten Ladeleistung (Prrve) an diesem Ladeanschluss (24) entsprechen.

6. Ausgleichsvorrichtung nach einem der Ansprüche 1 bis 5, ***bei der*** diese Ausgleichsvorrichtung (10a-10b) eine Sonde umfasst, die zwischen dem erwähnten Transformator (21) und dem erwähnten zusätzlichen Wechselrichter (23) angeordnet ist, um so eine von diesem Ladeanschluss (24) verbrauchte momentane Leistung (Pre) zu messen.

7. Ausgleichsvorrichtung nach einem der Ansprüche 1 bis 6, ***bei der*** diese Ausgleichsvorrichtung (10a-10b) eine Sonde umfasst, angeordnet zwischen diesem Wechselrichter (15) und der erwähnten Batteriegruppe (17), um so eine von diesem Ladeanschluss (24) verbrauchte momentane Leistung .(Peq) zu messen.

8. Verfahren zum Steuern einer Ausgleichsvorrichtung nach einem der Ansprüche 1 bis 7, dieses Verfahren umfasst die folgenden Schritte:
- Messung (50) der Differenz zwischen einer Spannungsmessung (mU), einer Frequenzmessung (mF) und einer Strommessung (ml) des Netzes und der Nennwerte zur Bestimmung des Ein- und/ oder Ausspeisebedarfs (ΔU, ΔF, ΔI);
- Bestimmung (51, 52) einer Steuerleistung (Pc1, Pc2) des mit der Batteriegruppe (17) verbundenen Wechselrichters (15), entsprechend dem Ein- und/ oder Ausspeisebedarf (ΔT, ΔF, ΔC) der aktiven und/ oder reaktiven Leistung;
- wenn der Einspeisebedarf (ΔT, ΔF, ΔC) höher liegt, als eine maximale Einspeiseleistung: (Pmax), Deaktivierung des zusätzlichen Wechselrichters (23) und Aktivierung des mit der Batteriegruppe (17) verbundenen Wechselrichters (15), um diese maximale Einspeiseleistung: (Pmax) einzuspeisen
- wenn der Einspeisebedarf (ΔT, ΔF, ΔC) niedriger liegt, als eine maximale Einspeiseleistung: (Pmax), Deaktivierung des zusätzlichen Wechselrichters (23) und Aktivierung des mit der Batteriegruppe (17) verbundenen Wechselrichters (15), um diese Steuerleistung (Pc1, Pc2) einzuspeisen;
- wenn der Ausspeisebedarf (ΔT, ΔF, ΔC) niedriger liegt, als eine geforderte Ladeleistung (Prrve) an diesem Ladeanschluss (24) und der Ladezustand der Batteriegruppe (17) über einem Schwellenwert liegt, Deaktivierung des mit der Batteriegruppe (17) verbundenen Wechselrichters (15) und Aktivierung des zusätzlichen Wechselrichters (23) um diese Steuerleistung (Pc1, Pc2) auszuspeisen, und
- wenn der Ausspeisebedarf (ΔT, ΔF, ΔC) höher liegt, als eine geforderte Ladeleistung (Prrve) an diesem Ladeanschluss (24) und der Ladezustand der Batteriegruppe (17) unter einem Schwellenwert liegt, Deaktivierung der beiden Wechselrichter (15, 23) bis der Ladezustand der Batteriegruppe (17) höher liegt als der erwähnte Schwellenwert.

9. Steuerverfahren nach Anspruch 8, ***bei der*** die erwähnte Steuerleistung (Pc1, Pc2) bestimmt wird (52) in Abhängigkeit von den Lastverlusten (Pe), geschätzt ausgehend von den Messungen (Pre, Peq) der beiden Sonden, die jeweils zwischen dem erwähnten Transformator (21) und dem erwähnten zusätzlichen Wechselrichter (23) und zwischen den erwähnten Wechselrichter (15) und der erwähnten Batteriegruppe (17) angeordnet sind.

## Claims

1. A balancing system (10a-10b) of a high-voltage or medium-voltage network comprising:
- a network input (11) incorporating protection units (12) for protecting said network and units for measuring (13) the performance of said network in order to detect the balancing requirements;
- a transformer (21) having a first winding connected to the output of said network input (11) and configured to lower the voltage of said network;
- an inverter (15) connected to a second winding of said transformer (14) and configured to transform an AC voltage into a DC voltage;
- a set of batteries (17) connected to said DC voltage; and
- a supervision unit (22) configured to activate said inverter (15) and to charge or discharge said batteries (17) when an imbalance is measured on said network by said measurement units (13);
*wherein* said balancing system (10a-10b) also includes an additional inverter (23) connected to a third winding of said transformer (21), the output of which makes it possible to supply power to at least one charging socket (24) of an electric or hybrid vehicle; and means for detecting a charging requirement of said charging socket (24);
said supervision unit (22) being configured to activate said additional inverter (23) when a charging requirement is detected at said charging socket (24) and the requirements for injection into the network are less than a threshold value.

2. The balancing system according to claim 1, ***wherein*** said units for measuring (13) the performance of said network in order to detect the balancing requirements comprise a dedicated energy meter for the operator of said network and an independent energy meter.

3. The balancing system according to one of claims 1 to 2, ***wherein*** said transformer (21) is delta-wired at the first winding, delta-wired at the second winding and star-wired at the third winding.

4. The balancing system according to one of claims 1 to 3, ***wherein*** said means for detecting a charging requirement of said charging socket (24) correspond to a probe configured to detect a consumption (Ep) at said charging socket (24).

5. The balancing system according to one of claims 1 to 3, ***wherein*** said means for detecting a charging requirement of said charging socket (24) correspond to a probe for measuring the requested charging power (Prrve) at said charging socket (24).

6. The balancing system according to one of claims 1 to 5, ***wherein*** said balancing system (10a-10b) comprises a probe disposed between said transformer (21) and said additional inverter (23) so as to measure an instantaneous power (Pre) consumed by said charging socket (24).

7. The balancing system according to one of claims 1 to 6, ***wherein*** said balancing system (10a-10b) comprises a probe disposed between said inverter (15) and said set of batteries (17) so as to measure an instantaneous power (Peq) consumed by said charging socket (24).

8. A method for managing a balancing system according to one of claims 1 to 7, said method comprising the following steps:
- measuring (50) the difference between a voltage measurement (mU), a frequency measurement (mF) and a current measurement (mI) of the network and nominal values in order to determine the injection and/or withdrawal requirements (ΔU, ΔF, ΔI);
- determining (51, 52) a control power (Pc1, Pc2) of the inverter (15) connected to the set of batteries (17) based upon the active and/or reactive power injection and/or withdrawal requirements (ΔT, ΔF, ΔC);
- if the injection requirements (ΔT, ΔF, ΔC) are greater than a maximum injection power (Pmax), deactivating the additional inverter (23) and activating the inverter (15) connected to the set of batteries (17) in order to inject said maximum injection power (Pmax),
- if the injection requirements (ΔT, ΔF, ΔC) are less than a maximum injection power (Pmax), deactivating the additional inverter (23) and activating the inverter (15) connected to the set of batteries (17) in order to inject said control power (Pc1, Pc2),
- if the withdrawal requirements (ΔT, ΔF, ΔC) are less than a requested charging power (Prrve) at said charging socket (24) and the charge level of the set of batteries (17) is greater than a threshold value, deactivating the inverter (15) connected to the set of batteries (17) and activating the additional inverter (23) in order to withdraw said control power (Pc 1, Pc2), and
- if the withdrawal requirements (ΔT, ΔF, ΔC) are greater than a requested charging power (Prrve) at said charging socket (24) and the charge level of the set of batteries (17) is less than a threshold value, activating the two inverters (15, 23) until the charge level of the set of batteries (17) is greater than said threshold value.

9. The management method according to claim 8, *wherein* said control power (Pc1, Pc2) is determined (52) based upon load losses (Pe) estimated from measurements (Pre, Peq) taken from two probes respectively disposed between said transformer (21) and said additional inverter (23) and between said inverter (15) and said set of batteries (17).
